# EUROPÄISCHE PATENTANMELDUNG

(11) **EP 4 682 061 A1**
(43) Veröffentlichungstag der Anmeldung: **21.01.2026**
(21) Anmeldenummer: 25189833.4
(22) Anmeldetag: 16.07.2025
(51) Int. Cl.: B64F 1/36, E01H 1/10

(54) **VORRICHTUNG ZUR REINIGUNG EINER LANDEZONE EINER START- UND LANDEBAHN**

(30) Priorität: 19.07.2024 DE 202024104048 U
(71) Anmelder: Smets-Technology GmbH, 15366 Hoppegarten (DE)
(72) Erfinder: SMETS, Sascha, 2100 Korneuburg (AT)
(74) Vertreter: Sperling, Thomas

(57) **Zusammenfassung**

Die Erfindung betrifft eine Vorrichtung (1) zur Reinigung einer Landezone einer Start- und Landebahn, welche mindestens ein Mittel zur Reinigung einer Oberfläche der Landezone aufweist, dadurch gekennzeichnet, dass die Vorrichtung (1) als Basisfahrzeug (2) eine Kehrmaschine umfasst, dass die Vorrichtung (1) einen mit dem Basisfahrzeug (2) verbundenen Anhänger (3) aufweist, dass auf dem Anhänger (3) eine Wasserhochdruckanordnung (4) angeordnet ist und dass am Basisfahrzeug (2) mindestens eine Hochdruckreinigungsanordnung (5) angeordnet ist.

## Beschreibung

Die Erfindung betrifft eine Vorrichtung zur Reinigung einer Landezone einer Start- und Landebahn, welche mindestens ein Mittel zur Reinigung einer Oberfläche der Landezone aufweist.

In einer sogenannten Landezone einer Start- und Landebahn eines Flugplatzes, welche auch als Touch-down-Zone bezeichnet wird, kommt es aufgrund einer Vielzahl von landenden Flugzeugen zu einem Gummiabrieb. Der Grund hierfür liegt darin, dass die nahezu nicht rotierenden Räder der Flugzeuge bei einer Landung durch einen Kontakt mit der Start- und Landebahn auf eine Geschwindigkeit beschleunigt werden, welche der Geschwindigkeit des Flugzeuges entspricht. Den Effekt verstärkend kommt hinzu, dass bei der Landung ein hoher Druck auf die Räder der Flugzeuge erzeugt wird, wodurch sich der Gummiabrieb auf der Start- und Landebahn verdichtet.

Auf der Start- und Landebahn entsteht somit ein schwarzer, fest am Untergrund anheftender Gummibelag. Dieser Gummibelag verschließt die Poren an der Oberfläche der Start- und Landebahn und führt somit zu einer Verringerung eines Reibwertes zwischen den Flugzeugreifen und der Start- und Landebahn. Das Verschließen der Poren verhindert auch ein Ablaufen von Regenwasser von der Oberfläche der Start- und Landebahn.

Da dieser Reibwert einen Einfluss auf ein Aufsetzen und Bremsverhalten von landenden Flugzeugen hat, ist dieser Reibwert sicherheitsrelevant und muss überwacht werden. Besonders bei einer nassen Start- und Landebahn verringert sich die Haftung des Flugzeugreifens auf der Start- und Landebahn erheblich.

Beispielsweise aus der EP 3 887 256 B1 ist eine Flughafenwartungseinrichtung zum Überwachen der Zustände von Landebahnen und Rollbahnen bekannt, bei welcher eine Meldung des Status der Landebahn oder Rollbahn an eine zentrale Flugsicherung erfolgt.

Wird ein festgelegter Mindestreibwert unterschritten, ist der Betreiber des Flugplatzes verpflichtet, geeignete Maßnahmen zur Verbesserung des Reibwertes auf der Start- und Landebahn einzuleiten.

Hierzu sind aus dem Stand der Technik spezielle Reinigungsfahrzeuge und Verfahren bekannt, bei denen der Gummiabrieb innerhalb der Landezone der Start- und Landebahn beispielsweise mittels eines Hochdruck-Wasserstrahls entfernt wird.

Aus der DE 100 42 042 C1 ist diesbezüglich eine Vorrichtung zur Reinigung einer Fahrbahn, insbesondere einer Start- und Landebahn eines Flughafens, bekannt. Die zu lösende Aufgabe besteht darin, eine Reinigungsvorrichtung zu schaffen, die mit einem einfachen und kompakten Aufbau eine verbesserte Reinigung ermöglicht.

Zur Lösung sind eine Verteilereinrichtung zum Aufbringen eines Hochdruckfluids, vorzugsweise Wasser mit hohem Druck, und ein Lüfterrad zum Absaugen des gelösten Schmutzes innerhalb eines Gehäuses integriert und werden durch einen gemeinsamen Antrieb in Drehung versetzt. Über die drehbare Verteilereinrichtung wird der Hochdruck-Wasserstrahl gleichmäßig auf der zu reinigenden Oberfläche verteilt. Durch die Drehbewegung des Lüfterrads wird gleichzeitig ein Sog erzeugt, der dafür sorgt, dass die von der Oberfläche abgelösten Partikel und das Reinigungswasser von der Oberfläche in das Gehäuse gesaugt und durch den Abluftkanal abtransportiert werden. Durch die in einem Arbeitsgang durchführbare Ablösung und Absaugung des abgelösten Materials wird eine besonders wirkungsvolle und effiziente Reinigung ermöglicht.

Diese oder andere aus dem Stand der Technik bekannte Lösungen sind üblicherweise in Spezialfahrzeugen integriert, welche für den speziellen Reinigungseinsatz optimiert und sehr kostenintensiv sind.

Wird an kleineren Flugplätzen ein derartiges Entfernen des Gummiabriebs innerhalb der Landezone der Start- und Landebahn beispielsweise nur ein Mal im Jahr durchgeführt, lohnt sich eine Anschaffung derartiger Spezialfahrzeuge für den Betreiber des Flugplatzes nicht.

Die Beauftragung einer speziellen, auf das Entfernen des Gummiabriebs spezialisierten Firma, führt zu einem unerwünschten Anstieg der Kosten des Betreibers des Flugplatzes.

Somit besteht ein Bedarf an einer alternativen Lösung zum Entfernen des Gummiabriebs innerhalb der Landezone der Start- und Landebahn.

Die Aufgabe der Erfindung besteht darin, eine Vorrichtung zur Reinigung einer Landezone einer Start- und Landebahn anzugeben, welche einen einfachen und kompakten Aufbau hat und preiswert herzustellen ist.

Die Aufgabe wird durch einen Gegenstand mit den Merkmalen gemäß Patentanspruch 1 gelöst. Weiterbildungen sind in den abhängigen Patentansprüchen angegeben.

Eine Vorrichtung zur Reinigung einer Landezone einer Start- und Landebahn verfügt üblicherweise über mindestens ein Mittel zur Reinigung einer Oberfläche der Landezone der Start- und Landebahn, mit welchem der fest am Untergrund anheftende Gummibelag zumindest vom Untergrund gelöst wird.

Erfindungsgemäß vorgesehen ist es, dass die Vorrichtung als Basisfahrzeug eine Kehrmaschine umfasst, dass die Vorrichtung einen mit dem Basisfahrzeug verbundenen Anhänger aufweist, dass auf dem Anhänger eine Wasserhochdruckanordnung angeordnet ist und dass am Basisfahrzeug mindestens eine Hochdruckreinigungsanordnung angeordnet ist.

Viele Betreiber von Flugplätzen verfügen über Reinigungsfahrzeuge wie eine Kehrmaschine, um wiederkehrende Säuberungsarbeiten auf größeren Flächen durchführen zu können. Überaschenderweise hat es sich herausgestellt, dass eine derartige Kehrmaschine als Basisfahrzeug für die erfindungsgemäße Vorrichtung zur Reinigung einer Landezone einer Start- und Landebahn vorteilhaft eingesetzt werden kann. Hierfür müssen entsprechende erfindungsgemäße Ergänzungen beziehungsweise Änderungen an der Kehrmaschine vorgenommen werden.

Als Kehrmaschine beziehungsweise Basisfahrzeug wird in dieser Beschreibung sowohl eine Kleinkehrmaschine als auch eine Straßenkehrmaschine verstanden. Derartige Kehrmaschinen weisen eine Masse in einem Bereich zwischen 1,0 t und 26,0 t auf. In der nachfolgenden Beschreibung wird beispielhaft der Begriff der Straßenkehrmaschine genutzt, ohne die vorliegende Erfindung darauf zu beschränken.

Die Vorrichtung zur Reinigung einer Landezone einer Start- und Landebahn umfasst auch einen mit dem Basisfahrzeug verbundenen Anhänger, welcher beispielsweise an einer Anhängerkupplung der als Basisfahrzeug verwendeten Straßenkehrmaschine angeordnet beziehungsweise befestigt ist.

Weiterhin ist es vorgesehen, dass auf diesem Anhänger eine Wasserhochdruckanordnung angeordnet ist. Eine derartige Wasserhochdruckanordnung weist beispielsweise einen Antriebsmotor und eine Hochdruckpumpe beziehungsweise Höchstdruckpumpe auf. Die Hochdruckpumpe beziehungsweise Höchstdruckpumpe wird nachfolgend nur kurz als Pumpe bezeichnet. Diese Pumpe ist eingangsseitig mit einem Wassertank verbunden, über welchen der Pumpe beispielsweise Frischwasser zugeführt wird. Derartige Pumpen sind in Ausführungen als Höchstdruckpumpen in der Lage, einen ausgangsseitigen Wasserdruck in einem Bereich von maximal 3000 bar zu erzeugen.

Das derart unter einem sehr hohen Druck stehende Reinigungsmedium wie Wasser wird von der Wasserhochdruckanordnung an eine am Basisfahrzeug angeordnete Hochdruckreinigungsanordnung weitergeleitet. Diese Hochdruckreinigungsanordnung ist dafür ausgelegt, dass diese mit dem unter einem sehr hohen Druck stehenden Reinigungsmedium beziehungsweise Wasser den am Untergrund anheftenden Gummibelag ablöst. Somit ist das Ablösen des Gummibelags ohne den Einsatz von chemischen Zusätzen möglich.

Als Antriebsmotor für die Wasserhochdruckanordnung kann ein Elektromotor oder ein Verbrennungsmotor zu Einsatz kommen, welcher ein vom Antriebsmotor erzeugtes Drehmoment auf die Höchstdruckpumpe überträgt und diese somit antreibt.

Vorgesehen ist es, dass die Hochdruckreinigungsanordnung ein Hochdruck-Reinigungstopf ist.

Am Basisfahrzeug der Vorrichtung zur Reinigung einer Landezone einer Start- und Landebahn wird eine Hochdruckreinigungsanordnung in Form eines Hochdruck-Reinigungstopfes angeordnet. Dieser Hochdruck-Reinigungstopf wird am Basisfahrzeug seitlich und beispielsweise etwa mittig in einer Längserstreckung des Basisfahrzeuges angeordnet. Der Hochdruck-Reinigungstopf wird bevorzugt an einer Position angeordnet, an welcher beim Basisfahrzeug wie einer Kehrmaschine üblicherweise eine sogenannte Tellerbürste angeordnet ist, welche zum Anbau des Hochdruck-Reinigungstopfes entfernt wird.

Weiterhin vorgesehen ist es, dass die Hochdruckreinigungsanordnung ein zylinderförmiges, nach unten offenes Gehäuse aufweist, dass in diesem Gehäuse ein Düsenbalken oder ein Düsenkreuz drehbar gelagert angeordnet ist und dass an einer Unterseite des Düsenbalkens mehrere Düsen angeordnet sind.

Die erfindungsgemäße Hochdruckreinigungsanordnung, welche auch als Hochdruck-Reinigungstopf bezeichnet wird, weist ein Gehäuse auf, welches in einer Form eines nach unten offenen Zylinders ausgeführt ist. Am Gehäuse sind beispielsweise drei Räder angeordnet, welche je nach Bedarf beziehungsweise Ausführung starr oder schwenkbar ausgeführt werden. Diese Räder ermöglichen ein Verfahren der Hochdruckreinigungsanordnung über der zu reinigenden Oberfläche der Landebahn, wobei die Hochdruckreinigungsanordnung mit dem Basisfahrzeug verbunden angeordnet ist und mit dem Basisfahrzeug gemeinsam verfahren wird.

Im oberen Bereich der Hochdruckreinigungsanordnung ist ein Antriebsmittel für den im Gehäuse drehbar gelagerten Düsenbalken oder das Düsenkreuz angeordnet. Dieses Antriebsmittel versetzt den Düsenbalken oder das Düsenkreuz innerhalb des Gehäuses der Hochdruckreinigungsanordnung in eine Drehbewegung beziehungsweise Rotation.

Als Hochdruckreinigungsanordnung sind in dieser Beschreibung beispielhaft die Ausführungen als Düsenbalken oder als Düsenkreuz genannt. Einem Fachmann ist klar, dass auch andere Düsenanordnungen als Hochdruckreinigungsanordnung eingesetzt werden können. Nachfolgend wird der Begriff des Düsenbalkens genutzt, ohne die vorliegende Erfindung darauf zu beschränken.

Am Düsenbalken ist eine Vielzahl von Düsen angeordnet. Diese Düsen sind beispielsweise in einer oder zwei Reihen angeordnet, wobei die Düsen in voneinander leicht abweichenden Richtungen ausgerichtet sein können. Im Wesentlichen sind die Düsen in Richtung der zu reinigenden Oberfläche der Landebahn ausgerichtet.

Die Zufuhr des Reinigungsmediums wie Wasser zum Düsenbalken erfolgt über eine Hochdruckleitung. Über diese Hochdruckleitung ist der Düsenbalken der Hochdruckreinigungsanordnung mit der Wasserhochdruckanordnung auf dem Basisfahrzeug verbunden.

Aus den Düsen des rotierenden Düsenbalkens tritt das unter hohem Druck von beispielsweise 3000 bar stehende Reinigungsmedium aus, trifft auf den fest am Untergrund anheftenden Gummibelag und löst diesen somit mechanisch vom Untergrund ab. Hierfür rotiert der Düsenbalken in einer Ebene parallel zur Oberfläche des Untergrundes wie einer zu reinigenden Landebahn.

Ein Mittel zum Aufnehmen von Schmutz beziehungsweise zum Aufnehmen des gelösten Gummibelages von der Oberfläche der Landezone der Start- und Landebahn ist mit Sauganschlüssen verbunden, welche beispielsweise seitlich am Gehäuse der Hochdruckreinigungsanordnung angeordnet sind.

Zur Begrenzung des Arbeitsbereiches der Hochdruckreinigungsanordnung ist am beziehungsweise im unteren Bereich des Gehäuses eine umlaufende Bürstenleiste angeordnet. Diese Bürstenleiste vermindert ein Austreten des Reinigungsmediums sowie der gelösten Teile des Gummibelags aus dem Bereich der Hochdruckreinigungsanordnung.

Besonders vorteilhaft ist es, dass die Hochdruckreinigungsanordnung eine Arbeitsbreite von 200 mm bis 1000 mm, insbesondere eine Arbeitsbreite von 800 mm aufweist.

Für eine effektive Reinigung der Oberfläche der Landezone, bei welcher der fest am Untergrund anheftende Gummibelag vom Untergrund gelöst wird, wird eine Arbeitsbreite der Hochdruckreinigungsanordnung in einem Bereich zwischen 200 mm bis 1000 mm gewählt. In einem Beispiel mit einer bevorzugten Arbeitsbreite der Hochdruckreinigungsanordnung von 800 mm bedeutet das, dass die Vorrichtung zur Reinigung einer Landezone einer Start- und Landebahn bei ihrer Bewegung über die Start- und Landebahn den Gummibelag in einem Streifen mit einer Breite von 800 mm bei einer Fahrt entfernen kann. Hierzu wird das Basisfahrzeug, welches über sogenannte Kriechgänge für eine langsame Bewegung des Fahrzeuges verfügt, beispielsweise mit einer Geschwindigkeit im Bereich zwischen 0,18 km/h bis 3,6 km/h über der Start- und Landebahn verfahren.

Da der auf der Start- und Landebahn zu entfernende, am Untergrund anheftende Gummibelag üblicherweise über eine Breite größer als 800 mm auftritt, muss die Vorrichtung im oben dargestellten Beispiel mehrmals, beispielsweise mäanderförmig über die Landezone einer Start- und Landebahn bewegt beziehungsweise verfahren werden, um den anheftenden Gummibelag vollständig zu entfernen.

Erfindungsgemäß vorgesehen ist es weiterhin, dass auf dem Anhänger eine Steuereinheit angeordnet ist, welche mit einer in einem Führerhaus des Basisfahrzeuges angeordneten Bedieneinheit zur Steuerung über eine elektrische Leitung verbunden ist.

Eine derartige zentrale Steuereinheit ist in einer Ausführung der Erfindung auf dem Anhänger angeordnet. Mittels dieser zentralen Steuereinheit wird der Betrieb der Vorrichtung zur Reinigung einer Landezone einer Start- und Landebahn gesteuert. Dies Umfasst mindestens eine Ansteuerung des Antriebsmotors für die Wasserhochdruckanordnung sowie eine Ausrichtung beziehungsweise Ansteuerung der Hochdruckreinigungsanordnung am Basisfahrzeug.

Eine mit der zentralen Steuereinheit verbundene Bedieneinheit wird im Führerhaus des Basisfahrzeuges angeordnet. Diese Bedieneinheit wird in einer Reichweite des Fahrers des Basisfahrzeuges angeordnet und kann derart während der Fahrt vom Fahrer erreicht und bedient werden. Beispielsweise kann der Fahrer derart die zur Reinigung der Landezone der Start- und Landebahn notwendigen Baugruppen beziehungsweise Mittel einschalten beziehungsweise aktivieren und somit mit der Reinigung der Landezone, also mit dem Ablösen des am Untergrund anheftenden Gummibelages im Bereich der Arbeitsbreite der Hochdruckreinigungsanordnung, beginnen.

Für den Fall, dass das Ablösen des am Untergrund anheftenden Gummibelages im Bereich der Arbeitsbreite der Hochdruckreinigungsanordnung nicht mehr notwendig oder nicht mehr erwünscht ist, kann der Fahrer über die Bedieneinheit den Vorgang der Reinigung der Landebahn beenden.

In einer alternativen Ausführung ist die Steuereinheit im Basisfahrzeug angeordnet.

Neben dem Beginn und dem Ende des Reinigungsvorganges ist es mittels der Bedieneinheit weiterhin möglich, den zu erzeugenden Druck des Reinigungsmediums und/oder eine Ausrichtung der Hochdruckreinigungsanordnung am Basisfahrzeug und/oder eine Ausrichtung von Düsen innerhalb der Hochdruckreinigungsanordnung zu steuern.

Als besonders vorteilhaft hat sich erwiesen, dass die Wasserhochdruckanordnung einen Druck eines Reinigungsmediums in einem Bereich zwischen 1000 bar und 4000 bar, insbesondere einen Druck von 3000 bar erzeugt.

Mit der Erzeugung eines hohen Drucks des Reinigungsmediums wie Wasser von beispielsweise 3000 bar ist es unter Verwendung der Hochdruckreinigungsanordnung am Basisfahrzeug möglich, den am Untergrund anheftenden Gummibelag effektiv abzulösen.

Vorgesehen ist es auch, dass im Basisfahrzeug oder auf dem Anhänger ein Tank zur Bevorratung eines Reinigungsmediums angeordnet ist.

Ein Tank wie ein Frischwassertank bevorratet das Reinigungsmedium wie Wasser und ermöglicht somit den mobilen Einsatz der Vorrichtung zur Reinigung einer Landezone einer Start- und Landebahn auf der Landebahn des Flugplatzes.

Ein derartiger Tank weist ein Volumen zwischen 3,0 m³ und 5,0 m³ auf und ermöglicht derart eine ununterbrochene Einsatzdauer der Vorrichtung zur Reinigung einer Landezone einer Start- und Landebahn über einen längeren Zeitraum. Allgemein bekannt ist es, dass eine Einsatzdauer der Vorrichtung zur Reinigung einer Landezone einer Start- und Landebahn vom Fassungsvermögen des Tanks abhängt, wobei ein Tank mit einem größeren Volumen eine größere ununterbrochene Einsatzdauer ermöglicht.

Erfindungswesentlich ist es, dass zwischen dem Tank und der Wasserhochdruckanordnung eine zumindest teilweise flexible Leitung angeordnet ist.

Zur Zufuhr des Reinigungsmediums von Tank zur Wasserhochdruckanordnung sind diese Baugruppen mittels einer Leitung miteinander verbunden. Da der Tank in einer Ausführung der Vorrichtung auf dem Basisfahrzeug und die Wasserhochdruckanordnung auf dem Anhänger angeordnet sind, wird eine zumindest teilweise beziehungsweise abschnittsweise flexibel ausgebildete Leitung eingesetzt. Dieser flexible Teil der Leitung wird im Bereich zwischen dem Basisfahrzeug und dem Anhänger angeordnet und ermöglicht eine Bewegung des am Basisfahrzeug angeordneten Anhängers, ohne dass Undichtigkeiten an der Leitung auftreten. Die Kopplung einer derartigen abschnittsweise flexibel ausgebildeten Leitung erfolgt mittels üblicher, aus dem Stand der Technik bekannter, Schnellkupplungen.

Eine Kopplung von zwischen dem Basisfahrzeug und dem Anhänger notwendiger elektrischer Leitungen, beispielsweise zur Verbindung der im Führerhaus angeordneten Bedieneinheit mit der auf dem Anhänger angeordneten zentralen Steuerung, erfolgt ebenfalls über übliche, aus dem Stand der Technik bekannte, Steckverbindungen.

Weiterhin ist es besonders vorteilhaft, dass zwischen der Wasserhochdruckanordnung und der Hochdruckreinigungsanordnung eine zumindest teilweise flexible Hochdruckleitung angeordnet ist.

Zwischen der auf dem Anhänger angeordneten Wasserhochdruckanordnung und der am Basisfahrzeug angeordneten Hochdruckreinigungsanordnung ist eine zumindest teilweise flexible Hochdruckleitung angeordnet. Somit wird das unter einem hohen Druck von beispielsweise 3000 bar stehende Reinigungsmedium an die Hochdruckreinigungsanordnung übertragen.

Dieser flexible Teil der Hochdruckleitung wird ebenfalls im Bereich zwischen dem Basisfahrzeug und dem Anhänger angeordnet und ermöglicht eine Bewegung des am Basisfahrzeug angeordneten Anhängers, ohne dass Undichtigkeiten an der Hochdruckleitung auftreten. Zur Kopplung der abschnittsweise flexibel ausgebildeten Hochdruckleitung werden ebenfalls aus dem Stand der Technik bekannte Schnellkupplungen eingesetzt.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine Ausführungsform der erfindungsgemäßen Vorrichtung zur Reinigung einer Landezone einer Start- und Landebahn,
- Fig. 2a, 2b, 2c, 2d:: eine Ausführungsform einer beispielhaften Hochdruckreinigungsanordnung und
- Fig. 3a, 3b, 3c:: eine Ausführungsform des erfindungsgemäßen Düsenbalkens.

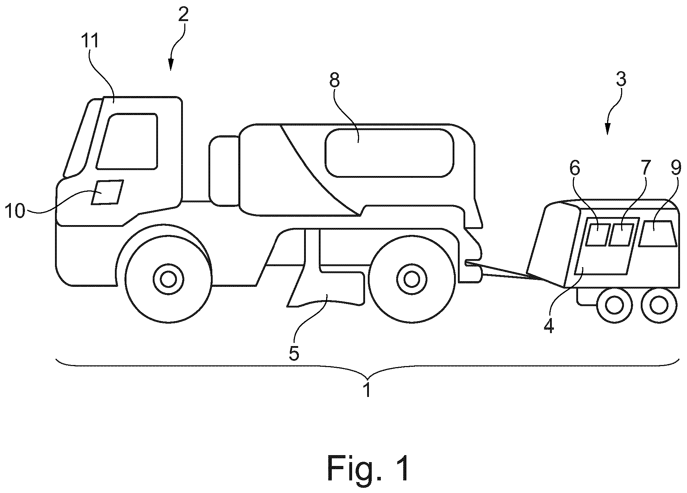

In der **Figur 1** ist eine Ausführungsform der erfindungsgemäßen Vorrichtung 1 zur Reinigung einer Landezone einer Start- und Landebahn dargestellt.

Die Vorrichtung 1 umfasst ein Basisfahrzeug 2 und einen am Basisfahrzeug 2 angeordneten, also mit dem Basisfahrzeug 2 gekoppelten, Anhänger 3.

Am Basisfahrzeug 2 ist eine Hochdruckreinigungsanordnung 5 angeordnet. Diese Hochdruckreinigungsanordnung 5 ist in einem geringen Abstand zu einer unter dem Basisfahrzeug 2 befindlichen Fahrbahnoberfläche und bevorzugt zwischen den Achsen des Basisfahrzeuges 2 platziert.

Auf dem Anhänger 3 ist eine Wasserhochdruckanordnung 4 platziert, welche über eine nicht dargestellte, zumindest teilweise, flexible Hochdruckleitung 17 mit einer am Basisfahrzeug 2 angeordneten Hochdruckreinigungsanordnung 5 verbunden ist. Eine derartige Hochdruckreinigungsanordnung 5 kann als ein Hochdruck-Reinigungstopf ausgeführt sein.

Die Hochdruckreinigungsanordnung 5 wird am Basisfahrzeug 2 an einer Stelle angebracht, an welcher bei einem Basisfahrzeug 2 wie einer Straßenkehrmaschine üblicherweise eine Seitenbürste beziehungsweise eine Tellerbürste zur Reinigung der Fahrbahn angeordnet ist. Durch den Austausch der Seitenbürste beziehungsweise Tellerbürste des Basisfahrzeuges 2 gegen die Hochdruckreinigungsanordnung 5 wird das Basisfahrzeug 2 als Teil der erfindungsgemäßen Vorrichtung 1 in die Lage versetzt, einen Beitrag zur Reinigung einer Landezone einer Start- und Landebahn, insbesondere zum Entfernen des fest am Untergrund anheftenden Gummibelages zu leisten.

Um dieses Entfernen des Gummibelages zu ermöglichen, weist die Wasserhochdruckanordnung 4 einen Antriebsmotor 6 und eine Hochdruckpumpe 7 auf. Derart ist es möglich, dass die vom Antriebsmotor 6 angetriebene Hochdruckpumpe 7 ein Reinigungsmedium wie beispielsweise Wasser komprimiert und einen Druck des Reinigungsmediums in einem Bereich von beispielsweise 3000 bar erzeugt.

Das beispielsweise unter einem Druck von 3000 bar stehende Reinigungsmedium wie Wasser wird von der Hochdruckpumpe 7 der Wasserhochdruckanordnung 4 über die nicht dargestellte zumindest teilweise flexible Hochdruckleitung 17 zur Hochdruckreinigungsanordnung 5 gefördert. Die Hochdruckreinigungsanordnung 5 weist entsprechende nicht dargestellte Mittel wie Düsen auf, über welche das unter hohem Druck stehende Reinigungsmedium aus der Hochdruckreinigungsanordnung 5 beispielsweise strahlförmig abgegeben wird. Eine kinetische Energie des derart abgegeben Reinigungsmediums führt zum mechanischen Lösen und Entfernen des am Untergrund anheftenden Gummibelages.

Ein am Basisfahrzeug 2, wie einer Straßenkehrmaschine üblicherweise angeordnetes Mittel zum Aufnehmen von Schmutz beziehungsweise zusammengekehrten Dreck von der Oberfläche einer Fahrbahn wird in der erfindungsgemäßen Vorrichtung genutzt, um den gelösten Gummibelag aufzunehmen und abzutransportieren. Dieses Mittel ist in der Figur 1 nicht dargestellt. Ein derartiges Mittel ist beispielsweise ein Sauggebläse, welches im Aufbau des Basisfahrzeuges 2 beispielsweise benachbart zu einem Tank 8 angeordnet ist.

Zur Bevorratung des Reinigungsmediums Wasser ist im Beispiel der Figur 1 auf dem Basisfahrzeug 2 der Tank 8 angeordnet. Ein derartiger, beispielsweise 3000 I aufnehmender Tank 8, ist über eine nicht dargestellte, zumindest teilweise flexible Leitung mit der auf dem Anhänger 3 angeordneten Wasserhochdruckanordnung 4 zur Zufuhr des Reinigungsmediums zur Hochdruckpumpe 7 verbunden.

Im Ausführungsbeispiel der Figur 1 ist auf dem Anhänger 3 eine zentrale Steuereinheit 9 angeordnet. Diese Steuereinheit 9 ist mit einer Bedieneinheit 10 verbunden, über welche die Funktionen der Vorrichtung 1 zur Reinigung einer Landezone der Start- und Landebahn gesteuert werden. Diese Bedieneinheit 10 ist in einem Führerhaus 11 des Basisfahrzeuges 2 angeordnet und kann somit einfach durch einen Fahrer des Basisfahrzeuges 2 erreicht und bedient werden. Zur Übertragung der Steuer- beziehungsweise Bediensignale ist die Bedieneinheit 10 zumindest mit der Steuereinheit 9 über entsprechende elektrische Leitungen verbunden.

Einem Fachmann ist klar, dass die Steuereinheit 9 und/oder die Bedieneinheit 10 zur Steuerung des Ablaufes bei der Reinigung der Landezone der Start- und Landebahn durch die erfindungsgemäße Vorrichtung 1 mit weiteren Mitteln und Baugruppen wie beispielsweise Ventilen, Sensoren, Pumpen und Anzeigemitteln verbunden sind, was in der Figur1 nicht dargestellt wurde.

Zur Realisierung einer lösbaren und wassergeschützten Verbindung der elektrischen Leitung zwischen dem Basisfahrzeug 2 und dem Anhänger 3 werden aus dem Stand der Technik bekannte Steckverbindungen eingesetzt, welche in der Figur 1 nicht dargestellt sind.

Zur Realisierung von lösbaren und druckdichten Verbindungen für die Leitung zum Transport des Reinigungsmediums vom Tank 8 zur Wasserhochdruckanordnung 4 und für die Hochdruckleitung 17, welche jeweils zwischen dem Basisfahrzeug 2 und dem Anhänger 3 angeordnet sind, werden aus dem Stand der Technik bekannte Schnellkupplungen eingesetzt, welche in der Figur 1 nicht dargestellt sind.

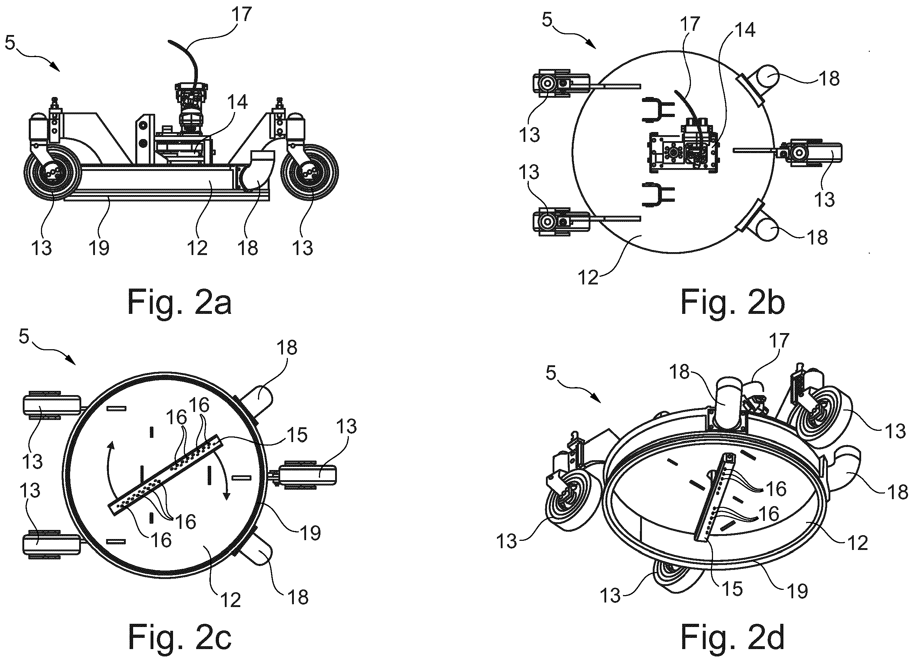

In den **Figuren 2a bis 2d** ist eine beispielhafte Ausführung einer Hochdruckreinigungsanordnung 5 in der Form eines Hochdruck-Reinigungstopfes dargestellt. Hierbei ist die Hochdruckreinigungsanordnung 5 in der Figur 2a in einer Ansicht von der Seite, in der Figur 2b in einer Ansicht von oben, in der Figur 2c in einer Ansicht von unten und in der Figur 2d in einer perspektivischen Ansicht von schräg unten dargestellt.

Die Hochdruckreinigungsanordnung 5 weist ein Gehäuse 12 auf, welches in einer Form eines nach unten offenen Zylinders ausgeführt ist. Am Gehäuse 12 sind drei Räder 13 angeordnet, welche je nach Bedarf beziehungsweise Ausführung starr oder schwenkbar ausgeführt werden.

Im oberen Bereich der Hochdruckreinigungsanordnung 5 ist ein Antriebsmittel 14 für einen im Gehäuse 12 drehbar gelagerten Düsenbalken 15 angeordnet. Das Antriebsmittel 14 versetzt den Düsenbalken 15 in eine Drehbewegung beziehungsweise Rotation, beispielsweise in der mittels zweier Pfeile in der Figur 2c dargestellten Richtung. Der Düsenbalken 15 rotiert in einer Ebene parallel zur Oberfläche der zu reinigenden Landebahn.

Am Düsenbalken 15 ist eine Vielzahl von Düsen 16 angeordnet. Diese Düsen 16 sind beispielsweise in einer oder zwei Reihen angeordnet, wobei die Düsen 16 in verschiede Richtungen ausgerichtet sein können.

Eine Zufuhr des Reinigungsmediums wie Wasser erfolgt über eine in den Figuren 2a, 2b und 2d nur teilweise dargestellte Hochdruckleitung 17. Über diese Hochdruckleitung 17 ist der Düsenbalken 15 der Hochdruckreinigungsanordnung 5 mit der in den Figuren 2a bis 2d nicht dargestellten Wasserhochdruckanordnung 4 verbunden.

Aus den Düsen 16 des rotierenden Düsenbalkens 15 tritt das unter hohem Druck von beispielsweise 3000 bar stehende Reinigungsmedium aus, trifft auf den fest am Untergrund anheftenden Gummibelag und löst diesen somit mechanisch vom Untergrund ab.

Ein Mittel zum Aufnehmen von Schmutz beziehungsweise zum Aufnehmen des gelösten Gummibelages von der Oberfläche der Landezone der Start- und Landebahn ist an Sauganschlüssen 18 angeschlossen. Dieses Mittel, welches als ein Sauggebläse ausgeführt wird, ist in den Figuren 2a bis 2d nicht dargestellt.

Zur Begrenzung des Arbeitsbereiches der Hochdruckreinigungsanordnung 5 ist am Gehäuse 12 im unteren Bereich eine umlaufende Bürstenleiste 19 angeordnet.

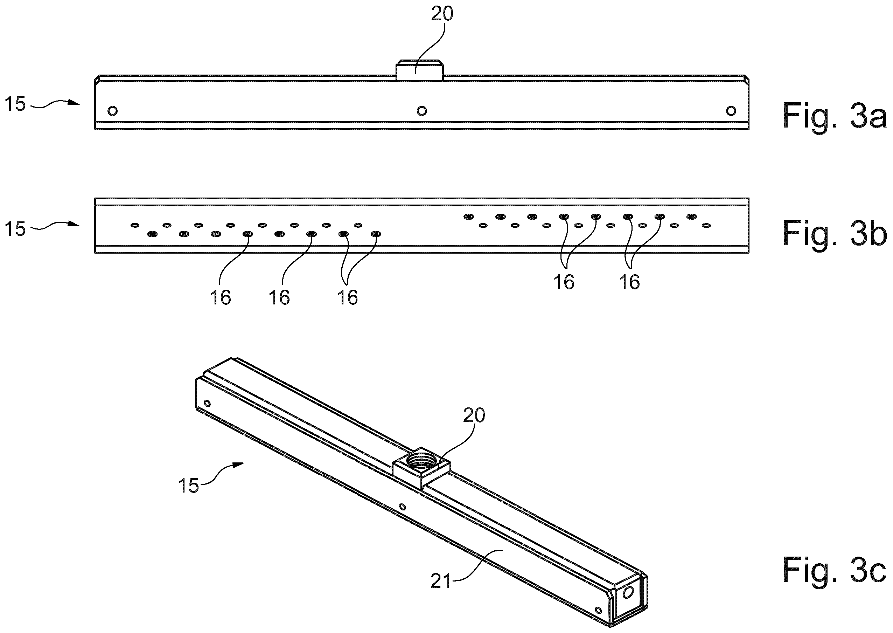

Die **Figuren 3a bis 3c** zeigen eine Ausführungsform des erfindungsgemäßen Düsenbalkens 15. Hierbei ist der Düsenbalken 15 in der Figur 3a in einer Ansicht von der Seite, in der Figur 3b in einer Ansicht von unten und in der Figur 3c in einer perspektivischen Ansicht von schräg oben dargestellt.

Der Düsenbalken 15 weist eine längserstreckte quaderförmige Form auf. In der Mitte des Düsenbalkens 15 ist im oberen Bereich ein Anschlussstutzen 20 angeordnet. Über diesen Anschlussstutzen 20 wird das Reinigungsmedium zum Düsenbalken 15 geführt, welches aus den am unteren Bereich des Düsenbalkens 15 angeordneten Düsen 16 austritt. Hierfür ist der Düsenbalken 15 hohl ausgeführt und verteilt das einströmende Reinigungsmedium an alle Düsen 16.

Über den Anschlussstutzen 20 ist der Düsenbalken 15 mit dem in den Figuren 3a bis 3c nicht dargestellten Antriebsmittel 14 mechanisch verbunden. Das Antriebsmittel 14 fixiert den Düsenbalken 15 im Gehäuse 12 der Hochdruckreinigungsanordnung 5 und versetzt den Düsenbalken 15 in eine Drehbewegung beziehungsweise Rotation.

In der Figur 3b ist die Anordnung der Düsen 16 in einer Reihe zu erkennen.

Der beispielhaft dargestellte Düsenbalken 15 hat eine Gesamtlänge von 570 mm, wobei sich bedingt durch die Anordnung der Düsen 16 am Düsenbalken 15 eine beispielhafte Arbeitsbreite von 500 mm ergibt.

Wie es in der Figur 3c dargestellt ist, kann zum Schutz des Düsenbalkens 15 eine Schutzhalbschale 21 am Düsenbalken 15 angebracht werden, wenn dieser nicht in Betrieb ist. Derart können beispielsweise Schäden an den Düsen 16 vermieden werden, wenn das Basisfahrzeug 2 zu einem Einsatzort hin oder von diesem weg verfahren wird.

### Bezugszeichenliste

- 1: Vorrichtung zur Reinigung einer Landezone einer Start- und Landebahn
- 2: Basisfahrzeug/Kehrmaschine
- 3: Anhänger
- 4: Wasserhochdruckanordnung
- 5: Hochdruckreinigungsanordnung
- 6: Antriebsmotor
- 7: Hochdruckpumpe
- 8: Tank
- 9: Steuereinheit
- 10: Bedieneinheit
- 11: Führerhaus
- 12: Gehäuse
- 13: Räder
- 14: Antriebsmittel
- 15: Düsenbalken
- 16: Düsen
- 17: Hochdruckleitung
- 18: Sauganschluss
- 19: Bürstenleiste
- 20: Anschlussstutzen
- 21: Schutzhalbschale

## Patentansprüche

1. Vorrichtung (1) zur Reinigung einer Landezone einer Start- und Landebahn, welche mindestens ein Mittel zur Reinigung einer Oberfläche der Landezone aufweist, **dadurch gekennzeichnet, dass** die Vorrichtung (1) als Basisfahrzeug (2) eine Kehrmaschine umfasst, dass die Vorrichtung (1) einen mit dem Basisfahrzeug (2) verbundenen Anhänger (3) aufweist, dass auf dem Anhänger (3) eine Wasserhochdruckanordnung (4) angeordnet ist und dass am Basisfahrzeug (2) mindestens eine Hochdruckreinigungsanordnung (5) angeordnet ist.

2. Vorrichtung (1) nach Anspruch 1, **dadurch gekennzeichnet, dass** die Hochdruckreinigungsanordnung (5) ein Hochdruck-Reinigungstopf ist.

3. Vorrichtung (1) nach Anspruch 1 oder 2, **dadurch gekennzeichnet, dass** die Hochdruckreinigungsanordnung (5) eine Arbeitsbreite von 200 mm bis 1000 mm, insbesondere eine Arbeitsbreite von 800 mm aufweist.

4. Vorrichtung (1) nach einem der Ansprüche 1 bis 3, **dadurch gekennzeichnet, dass** auf dem Anhänger (3) eine Steuereinheit (9) angeordnet ist, welche mit einer in einem Führerhaus des Basisfahrzeuges (2) angeordneten Bedieneinheit (10) zur Steuerung über eine elektrische Leitung verbunden ist.

5. Vorrichtung (1) nach einem der Ansprüche 1 bis 4, **dadurch gekennzeichnet, dass** die Wasserhochdruckanordnung (4) einen Druck eines Reinigungsmediums in einem Bereich zwischen 1000 bar und 4000 bar, insbesondere einen Druck von 3000 bar erzeugt.

6. Vorrichtung (1) nach einem der Ansprüche 1 bis 5, **dadurch gekennzeichnet, dass** im Basisfahrzeug (2) oder auf dem Anhänger (3) ein Tank (8) zur Bevorratung eines Reinigungsmediums angeordnet ist.

7. Vorrichtung (1) nach einem der Ansprüche 1 bis 6, **dadurch gekennzeichnet, dass** zwischen dem Tank (8) und der Wasserhochdruckanordnung (4) eine zumindest teilweise flexible Leitung angeordnet ist.

8. Vorrichtung (1) nach einem der Ansprüche 1 bis 7, **dadurch gekennzeichnet, dass** zwischen der Wasserhochdruckanordnung (4) und der Hochdruckreinigungsanordnung (5) eine zumindest teilweise flexible Hochdruckleitung (17) angeordnet ist.

9. Vorrichtung (1) nach einem der Ansprüche 1 bis 8, **dadurch gekennzeichnet, dass** die Wasserhochdruckanordnung (4) einen Antriebsmotor (6) und eine Hochdruckpumpe (7) umfasst.

10. Vorrichtung (1) nach einem der Ansprüche 1 bis 9, **dadurch gekennzeichnet, dass** die Hochdruckreinigungsanordnung (5) ein zylinderförmiges, nach unten offenes Gehäuse (12) aufweist, dass in diesem Gehäuse (12) ein Düsenbalken (15) oder ein Düsenkreuz drehbar gelagert angeordnet ist und dass an einer Unterseite des Düsenbalkens (15) oder des Düsenkreuzes mehrere Düsen (16) angeordnet sind.
